# EUROPÄISCHE PATENTSCHRIFT

(11) **EP 4 211 756 B1**
(45) Veröffentlichungstag und Bekanntmachung des Hinweises auf die Patenterteilung: **10.12.2025**
(21) Anmeldenummer: 21778348.9
(22) Anmeldetag: 01.09.2021
(51) Int. Cl.: H01R 13/56, H01R 13/58, H02G 3/18, H02G 3/06

(54) **DREHBARER KABELABGANGSSTUTZEN FÜR EIN STECKVERBINDERGEHÄUSE**
ROTATABLE CABLE OUTLET PIECE FOR A PLUG CONNECTOR HOUSING
PIÈCE DE SORTIE DE CÂBLE ROTATIVE POUR BOÎTIER DE CONNECTEUR MÂLE

(30) Priorität: 11.09.2020 DE 102020123691
(43) Veröffentlichungstag der Anmeldung: 19.07.2023
(73) Patentinhaber: HARTING Electric Stiftung & Co. KG, 32339 Espelkamp (DE)
(72) Erfinder: BENEKE, Andre, 32339 Espelkamp (DE); WITTPAHL, Markus, 32339 Espelkamp (DE)
(86) Internationale Anmeldenummer: PCT/DE2021/100725
(87) Internationale Veröffentlichungsnummer: WO 2022/053106

(56) Entgegenhaltungen:
- DE-T2- 69 716 176
- US-A1- 2006 094 285

## Beschreibung

Die Erfindung geht aus von einem Steckverbindergehäuse nach der Gattung des unabhängigen Anspruchs 1.

Derartige Steckverbindergehäuse werden insbesondere in rauen Industrieumgebungen eingesetzt. Die hier eingesetzten Steckverbinder müssen besonders robust und gleichzeitig an den vorhandenen Bauraum anpassbar sein. Man spricht daher auch von schweren Steckverbindern.

### Stand der Technik

Aus der DE 102017 118 918 A1 ist ein Steckverbindergehäuse mit einem festen und gewinkelten Kabelabgang bekannt. Hier werden die Kabel in einer vorbestimmten Abgangsrichtung vom Steckverbindergehäuse weggeführt. Je nach Einsatzbedingung werden unterschiedliche Steckverbindergehäuse verwendet.

Die DE 10 2013 102 886 A1 zeigt einen Aufsteckwinkel für einen Kabelabgang eines Steckverbinders. Durch den Aufsteckwinkel kann der Biegewinkel des Kabels geändert und damit ein gewinkelter Kabelabgang erreicht werden.

Die DE 69716176 T2 zeigt einen Rundsteckverbinder mit einem Kabelabgang dessen Ausrichtung bzw. Kabelabgangsrichtung variieren kann. Der Kabelabgang ist relativ zur Steckrichtung um 180° dreh- und verrastbar.

Die US 2006/094285 A1 zeigt einen elektrischen Steckverbinder mit zwei rohrförmigen Komponenten, die über eine drehbare Verbindung an Schrägflächen zusammenpassen, so dass ein angeschlossenes Kabel in einem Winkel von 0 bis 90 Grad verdreht werden kann.

Der Aufsteckwinkel ist als separates Bauteil ausgeführt und kann in rauen Industrieumgebungen leicht beschädigt werden oder verloren gehen. Außerdem ist die Biegekraft des Aufsteckwinkels begrenzt, so dass Kabel mit großem Durchmesser hiermit nicht gebogen werden können.

Das Deutsche Patent- und Markenamt hat in der Prioritätsanmeldung zur vorliegenden Anmeldung den folgenden Stand der Technik recherchiert: DE 10 2014 102 930 A1 und US 6,338,645 B1.

### Aufgabenstellung

Die Aufgabe der Erfindung besteht darin, ein robustes und flexibel an die Einbauumgebung anpassbares Steckverbindergehäuse vorzuschlagen.

Die Aufgabe wird durch den Gegenstand des Anspruchs 1 gelöst.

Vorteilhafte Ausgestaltungen der Erfindung sind in den Unteransprüchen und der folgenden Beschreibung angegeben.

Das erfindungsgemäße Steckverbindergehäuse weist eine Kabeldurchgangsöffnung mit einem im Wesentlichen kreisförmigen Querschnitt auf. Mit "im Wesentlichen kreisförmig" ist gemeint, dass der Querschnitt beispielsweise auch oval ausgeführt sein kann. Es ist nur wichtig, dass die Kabeldurchgangsöffnung keine scharfen Kanten aufweist, die den Kabelmantel eines angeschlossenen Kabels beschädigen könnten.

Das Steckverbindergehäuse weist einen Kabelabgangsstutzen auf, der im Wesentlichen die Form eines gewinkelten Zylinders aufweist. Der Kabelabgangsstutzen ist Bestandteil des Steckverbindergehäuses. Der Kabelabgang kann geometrisch durch zwei Zylinderkörper beschrieben werden, die mithilfe eines Gärungsquerschnitts zusammengesetzt sind. Man kann auch sagen, dass der Kabelabgangsstutzen einen Biegewinkel aufweist. Der Biegewinkel wird durch die Hauptsymmetrieachsen der oben beschriebenen, zusammengesetzten Zylinderkörper eingeschlossen.

Durch einen gewinkelten Kabelabgangsstutzen geht auch das angeschlossene Kabel gewinkelt vom Steckverbindergehäuse bzw. vom Steckverbinder ab. Dies kann in vielen Einbausituationen Platzvorteile schaffen. Insbesondere wenn ein Steckverbinder an eine Maschinenwand gesteckt wird, kann das Kabel platzsparend nach oben, unten, rechts oder links weggeführt werden.

Der Kabelabgangsstutzen ist an der Kabeldurchgangsöffnung fixiert. Gleichzeitig ist er in Umfangsrichtung drehbar gelagert. Durch die Drehbarkeit kann die Kabelabgangsrichtung (links, rechts, oben oder unten) flexibel gewählt werden. Es müssen nicht bestimmte Steckverbindergehäuse mit bestimmten Abgangsrichtungen vorgehalten werden. Dadurch wird zusätzlich zur flexiblen Einsatzfähigkeit die Lagerhaltung für derartige Steckverbindervarianten reduziert.

Erfindungsgemäss weist die Kabeldurchgangsöffnung einen vom Steckverbindergehäuse abstehenden Kragen mit zumindest einer Fixieröffnung auf, wobei die Fixieröffnung im Kragenmantel angeordnet ist. Der Kabelabgangsstutzen weist außenseitig eine umlaufende Nut auf, wobei in der Nut ein Ring eingelegt und in Umlaufrichtung drehbar gelagert ist. Der Ring weist zumindest einen radial abstehenden Fixierbolzen auf, wobei der zumindest eine Fixierbolzen in die zumindest eine Fixieröffnung des Kragens eingreift. Dadurch ist der Kabelabgangsstutzen an der Kabeldurchgangsöffnung des Steckverbindergehäuses fixierbar und in Umfangsrichtung drehbar gelagert.

Vorteilhafterweise hat der Kragen eine im Wesentlichen zylinderförmige Mantelfläche. Eine derartige Geometrie kann im Spritz- oder Druckgussprozess einfach vorgesehen werden. Das Steckverbindergehäuse kann aus Kunststoff aber auch aus Metall (Zinkdruckguss oder Aluminiumdruckguss) bestehen.

In einer besonders bevorzugten Ausführungsform der Erfindung weist der Kragen der Kabeldurchgangsöffnung zwei gegenüberliegende Fixieröffnungen auf. Dazu passend weist der Ring zumindest zwei radial abstehende Fixierbolzen auf. Die Fixierbolzen greifen jeweils in eine ihnen zugeordnete Fixieröffnung ein. Diese Variante hat sich als besonders robust und zuverlässig erwiesen.

Vorzugsweise weist die Kabeldurchgangsöffnung zumindest eine innenliegende Stufe, bevorzugt jedoch zwei gegenüberliegende innenliegende Stufen, auf. Dazu passend weist der Kabelabgangsstutzen zumindest eine axial abstehende Nase, bevorzugt jedoch zwei gegenüberliegende axial abstehende Nasen, auf. Bei einer radialen Drehung entlang der Umfangsrichtung des Kabelabgangsstutzens werden die Nasen gegen die Stufen geführt. Dadurch wird die Drehung des Kabelabgangsstutzens mechanisch begrenzt. Die Stufe stellt demnach eine Anschlagkante für die Nase dar. Stufe und Nase bzw. Stufen und Nasen bilden zusammen eine Drehwinkelbegrenzung.

Vorteilhafterweise weisen die Stufen jeweils die oben erwähnte Fixieröffnung auf. Dadurch wird weniger Bauraum für die Stufen benötigt, die insgesamt sehr schmal realisiert werden können. Über die Breite der Stufen, in Umlaufrichtung gesehen, kann der für den Kabelabgangsstutzen mögliche Drehwinkel eingestellt werden. Je breiter die Stufe, desto begrenzter ist der Drehwinkel und umgekehrt. Die Stufen fungieren in Kombination mit den Nasen als Radialdrehbegrenzer des Kabelabgangsstutzens. Vorzugsweise liegt der Drehwinkel zwischen 120° und 60°, wobei die Grenzbereiche im Intervall enthalten sind.

Vorzugsweise ist der Kabelabgangsstutzen gewinkelt ausgeführt. Der Biegewinkel liegt zwischen 140° und 90°. Das bedeutet, dass der Richtungsvektor seiner Kabeleinführrichtung und der Richtungsvektor seiner Kabelabgangsrichtung einen Winkel zwischen 140° und 90° einschließen können, wobei die Randbereiche im beanspruchten Winkelintervall enthalten sind. Durch diese Winkelbereiche können alle Anwendungsmöglichkeiten des Steckverbindergehäuses hinreichend abdecket werden. Die Kabel können sowohl mit einem stumpfen Winkel - ohne zu große Kabelbiegung - abgeführt werden. Eine stärkere Biegung im rechten Winkel kann jedoch ebenfalls realisiert werden.

Die erfindungsgemäßen Steckverbindergehäuse werden bei so genannten schweren Steckverbindern, auch Industriesteckverbinder genannt, verwendet. Derartige Steckverbindergehäuse weisen vorzugsweise einen im Wesentlichen rechteckigen Querschnitt auf.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines schweren Steckverbinders mit einem erfindungsgemäßen Steckverbindergehäuse,
- Fig. 2: eine geschnittene Teilansicht des Steckverbindergehäuses im Bereich des Kabelabgangsstutzens,
- Fig. 3: eine geschnittene perspektivische Draufsicht auf das erfindungsgemäße Steckverbindergehäuse und
- Fig. 4: eine Explosionszeichnung eines Ausschnitts des erfindungsgemäßen Steckverbindergehäuses.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

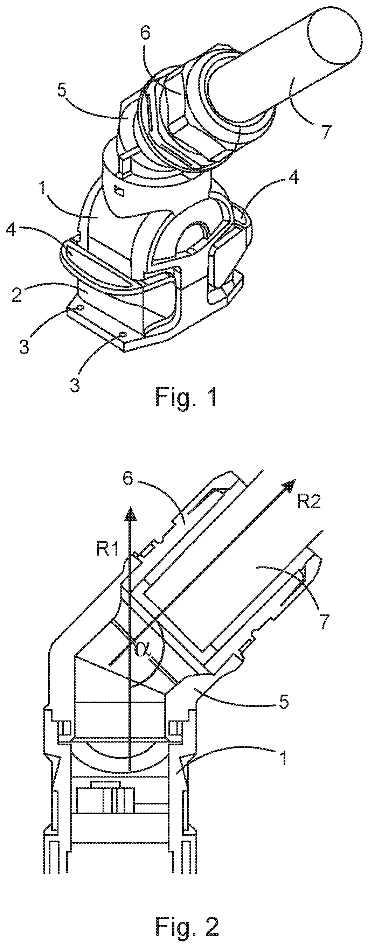

Die Figur 1 zeigt eine perspektivische Darstellung eines schweren Steckverbinders mit einem erfindungsgemäßen Steckverbindergehäuse 1. Der Steckverbinder ist in einen so genannten Anbauflansch 2 eingesteckt. Ein solcher Anbauflansch 2 befindet sich beispielsweise an einer Gerätewand (nicht gezeigt) und wird hieran über die Schrauböffnungen 3 befestigt.

Zur Fixierung der Steckverbindung verfügt der Anbauflansch 2 über zwei seitlich an den Schmalseiten angebrachte und schwenkbare Verriegelungsbügel 4, die jeweils über Verriegelungszapfen (nicht zu sehen) des Steckverbindergehäuses 1 übergreifen.

Das Steckverbindergehäuse 1 verfügt über einen Kabelabgangsstutzen 5 an dessen Kabelabgangsende sich eine Kabelverschraubung 6 zur Fixierung und Zugentlastung des angeschlossenen Kabels 7 befindet.

In Figur 2 ist beispielsweise zu erkennen, dass der Kabelabgangsstutzen 5 im Wesentlichen die Form eines gewinkelten Zylinders hat. Das bedeutet, dass der Kabelabgangsstutzen 5 zunächst gerade in Kabelabgangsrichtung vom Steckverbindergehäuse 1 verläuft und dann in eine Richtung, die davon abweicht, abknickt. Das Kabel 7 verlässt das Steckverbindergehäuse 1 zunächst in Richtung R1 und knickt dann später in Richtung R2 ab. Die Richtungsvektoren R1 und R2 schließen einen Biegewinkel α ein. Der Biegewinkel α liegt zwischen 140° und 90°.

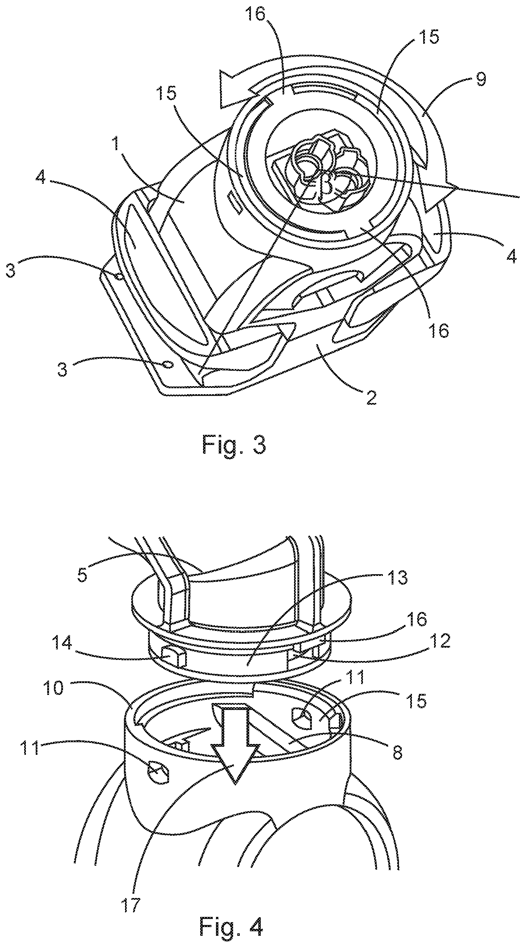

Der Kabelabgangsstutzen 5 ist an der Kabeldurchgangsöffnung 8 des Steckverbindergehäuses 1 fixierbar und in Umfangsrichtung relativ zur Kabeldurchgangsöffnung drehbar gelagert. Die Drehrichtung wird durch den Doppelpfeil 9 in Figur 3 gekennzeichnet.

In Figur 4 werden die Funktionselemente für die Drehbarkeit des Kabelabgangsstutzens 1 erläutert. Die Kabeldurchgangsöffnung 8 verfügt über einen vom Steckverbindergehäuse 1 abstehenden Kragen 10, in welchen zwei gegenüberliegende Fixieröffnungen 11 eingeformt sind.

Der Kabelabgangsstutzen 5 weist im unteren Anschlussbereich eine außenseitig umlaufende Nut 12 auf. In diese Nut ist ein Ring 13 eingelegt, wobei der Reibungskoeffizient zwischen der Oberfläche der Nut 12 und der Innenseite des Ringes 13 so ausgewählt ist, dass der Ring 13 in der Nut 12 in Umlaufrichtung drehbar gelagert ist. Der Kabelabgangsstutzen 5 wird in Richtung des Pfeils 17 mit dem Steckverbindergehäuse 1 verrastet.

Der Ring 13 weist zwei gegenüberliegende, radial abstehenden Fixierbolzen 14 auf. In Figur 4 ist aus darstellerischen Gründen jedoch nur ein Fixierbolzen 14 zu erkennen. Die Fixierbolzen 14 greifen jeweils in eine Fixieröffnung 11 ein, wodurch der Kabelabgangsstutzen 5 am Steckverbindergehäuse 1 fixiert ist. Durch die Drehbarkeit des Ringes 13 ist der gesamte Kabelabgangsstutzen 5 in Richtung des Doppelpfeils 9 (Umfangsrichtung) drehbar am Steckverbindergehäuse 1 gelagert.

In der Kabeldurchgangsöffnung 8 sind zwei gegenüberliegende innenliegende Stufen 15 vorgesehen. Die Fixieröffnung 11 ist in dieser Stufen 15 eingebracht. Der Kabelabgangsstutzen 5 weist außenseitig zwei gegenüberliegende, axial abstehende Nasen 16 auf. Beim Drehvorgang des Kabelabgangsstutzens 5 werden die Nasen 16 des Kabelabgangsstutzens 5 jeweils gegen eine Stufe 15 der Kabeldurchgangsöffnung 8 gedreht, wodurch eine Drehbegrenzung realisiert wird. Eine Drehbegrenzung ist insbesondere notwendig, damit das angeschlossene Kabel 7 keine zu hohe Torsion erfährt und dadurch möglicherweise beschädigt werden könnte.

In Figur 3 ist der Drehwinkel β eingezeichnet, um welchen der Kabelabgangsstutzen 5 relativ zum Steckverbindergehäuse 1 bzw. zur Kabeldurchgangsöffnung 8 drehbar ist. Es hat sich erwiesen, dass ein Drehwinkel β zwischen 120° und 60° hinreichend ist.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Steckverbindergehäuse
- 2: Anbauflansch
- 3: Schrauböffnung
- 4: Verriegelungsbügel
- 5: Kabelabgangsstutzen
- 6: Kabelverschraubung
- 7: Kabel
- 8: Kabeldurchgangsöffnung
- 9: Doppelpfeil
- 10: Kragen
- 11: Fixieröffnung
- 12: Nut
- 13: Ring
- 14: Fixierbolzen
- 15: Stufe
- 16: Nase
- 17: Pfeil

- α: Biegewinkel
- β: Drehwinkel

## Patentansprüche

1. Steckverbindergehäuse (1) mit einer Kabeldurchgangsöffnung (8) mit einem im Wesentlichen kreisförmigen Querschnitt,
wobei das Steckverbindergehäuse (1) einen Kabelabgangsstutzen (5) aufweist, der im Wesentlichen die Form eines gewinkelten Zylinders aufweist, wobei der Kabelabgangsstutzen (5) an der Kabeldurchgangsöffnung (8) des Steckverbindergehäuses (1) fixierbar und in Umfangsrichtung relativ zur Kabeldurchgangsöffnung (8) drehbar gelagert ist
**dadurch gekennzeichnet, dass**
die Kabeldurchgangsöffnung (8) einen vom Steckverbindergehäuse (1) abstehenden Kragen (10) mit zumindest einer Fixieröffnung (11) aufweist,
wobei der Kabelabgangsstutzen (5) außenseitig eine umlaufende Nut (12) aufweist, wobei in der Nut (12) ein Ring (13) in Umlaufrichtung drehbar gelagert ist und
wobei der Ring (13) zumindest einen radial abstehenden Fixierbolzen (14) aufweist, wobei der zumindest eine Fixierbolzen (14) in die zumindest eine Fixieröffnung (11) eingreift.

2. Steckverbindergehäuse (1) nach Anspruch 1
**dadurch gekennzeichnet, dass**
der Kabelabgangsstutzen (5) in einem Drehwinkel (β) zwischen 120° und 60° relativ zur Kabeldurchgangsöffnung (8) drehbar ist.

3. Steckverbindergehäuse (1) nach Anspruch 1
**dadurch gekennzeichnet, dass**
der Kragen (10) eine im Wesentlichen zylinderförmige Mantelfläche aufweist.

4. Steckverbindergehäuse (1) nach Anspruch 1
**dadurch gekennzeichnet, dass**
der Kragen (10) der Kabeldurchgangsöffnung (8) zwei gegenüberliegende Fixieröffnungen (11) aufweist,
dass der Ring (13) zumindest zwei radial abstehende Fixierbolzen (14) aufweist und
dass die Fixierbolzen (14) jeweils in eine Fixieröffnung (11) eingreifen.

5. Steckverbindergehäuse (1) nach einem der vorstehenden Ansprüche **dadurch gekennzeichnet, dass**
die Kabeldurchgangsöffnung (8) zumindest eine innenliegende Stufe (15), bevorzugt jedoch zwei gegenüberliegende innenliegende Stufen (15), aufweist.

6. Steckverbindergehäuse (1) nach den beiden vorstehenden Ansprüchen **dadurch gekennzeichnet, dass**
die Stufen (15) jeweils eine Fixieröffnung (11) aufweisen.

7. Steckverbindergehäuse (1) nach einem der vorstehenden Ansprüche **dadurch gekennzeichnet, dass**
der Kabelabgangsstutzen (5) zumindest eine axial abstehende Nase (16), bevorzugt jedoch zwei gegenüberliegende axial abstehende Nasen (16), aufweist.

8. Steckverbindergehäuse (1) nach den beiden vorstehenden Ansprüchen **dadurch gekennzeichnet, dass**
die Nase (16) bzw. die Nasen (16) des Kabelabgangsstutzens (16) gegen die Stufe (15) bzw. jeweils gegen eine Stufe (15) der Kabeldurchgangsöffnung (8) drehbar sind.

9. Steckverbindergehäuse (1) nach einem der vorstehenden Ansprüche **dadurch gekennzeichnet, dass**
der Kabelabgangsstutzen (5) einen Biegewinkel (α) aufweist und dass der Winkel (α) zwischen 140° und 90° liegt.

10. Steckverbindergehäuse (1) nach einem der vorstehenden Ansprüche **dadurch gekennzeichnet, dass**
das Steckverbindergehäuse (1) einen im Wesentlichen rechteckigen Querschnitt aufweist.

## Claims

1. Plug connector housing (1) having a cable through-opening (8) with a substantially circular cross section, wherein the plug connector housing (1) has a cable outlet piece (5), which substantially has the form of an angled cylinder, wherein the cable outlet piece (5) can be fastened on the cable through-opening (8) of the plug connector housing (1) and is mounted for rotation in the circumferential direction relative to the cable through-opening (8),
**characterized in that**
the cable through-opening (8) has a collar (10), which protrudes from the plug connector housing (1) and has at least one fastening opening (11), wherein the cable outlet piece (5) has a circumferential groove (12) on the outside,
wherein a ring (13) is mounted in the groove (12) for rotation in the circumferential direction, and
wherein the ring (13) has at least one radially protruding fastening stud (14), wherein the at least one fastening stud (14) engages in the at least one fastening opening (11).

2. Plug connector housing (1) according to Claim 1, **characterized in that**
the cable outlet piece (5) can be rotated in a rotation angle (β) between 120° and 60° relative to the cable through-opening (8).

3. Plug connector housing (1) according to Claim 1, **characterized in that**
the collar (10) has a substantially cylindrical lateral surface.

4. Plug connector housing (1) according to Claim 1, **characterized in that**
the collar (10) of the cable through-opening (8) has two opposing fastening openings (11),
**in that** the ring (13) has at least two radially protruding fastening studs (14), and
**in that** the fastening studs (14) each engage in a fastening opening (11).

5. Plug connector housing (1) according to one of the preceding claims, **characterized in that**
the cable through-opening (8) has at least one internal step (15), but preferably two opposing internal steps (15).

6. Plug connector housing (1) according to the two preceding claims, **characterized in that**
the steps (15) each have a fastening opening (11).

7. Plug connector housing (1) according to one of the preceding claims, **characterized in that**
the cable outlet piece (5) has at least one axially protruding lug (16), but preferably two opposing axially protruding lugs (16).

8. Plug connector housing (1) according to the two preceding claims, **characterized in that**
the lug (16), or the lugs (16), of the cable outlet piece (16) can be rotated towards the step (15), or towards a respective step (15), of the cable through-opening (8).

9. Plug connector housing (1) according to one of the preceding claims, **characterized in that**
the cable outlet piece (5) has a bending angle (α) and **in that** the angle (α) is between 140° and 90°.

10. Plug connector housing (1) according to one of the preceding claims, **characterized in that**
the plug connector housing (1) has a substantially rectangular cross section.

## Revendications

1. Boîtier de connecteur enfichable (1) comportant une ouverture de passage de câble (8) avec une section transversale essentiellement circulaire,
le boîtier de connecteur enfichable (1) présentant un raccord de sortie de câble (5) qui présente essentiellement la forme d'un cylindre coudé, le raccord de sortie de câble (5) pouvant être fixé à l'ouverture de passage de câble (8) du boîtier de connecteur enfichable (1) et étant monté de manière à pouvoir tourner dans la direction circonférentielle par rapport à l'ouverture de passage de câble (8),
**caractérisé en ce que**
l'ouverture de passage de câble (8) présente un collet (10) qui dépasse du boîtier de connecteur enfichable (1) et qui comporte au moins une ouverture de fixation (11), le raccord de sortie de câble (5) présentant sur le côté extérieur une rainure périphérique (12),
une bague (13) étant montée dans la rainure (12) de manière à pouvoir tourner dans la direction périphérique et
la bague (13) présentant au moins un boulon de fixation (14) saillant radialement, l'au moins un boulon de fixation (14) s'engageant dans l'au moins une ouverture de fixation (11).

2. Boîtier de connecteur enfichable (1) selon la revendication 1,
**caractérisé en ce que**
le raccord de sortie de câble (5) peut tourner selon un angle de rotation (β) compris entre 120° et 60° par rapport à l'ouverture de passage de câble (8).

3. Boîtier de connecteur enfichable (1) selon la revendication 1,
**caractérisé en ce que**
le collet (10) présente une surface d'enveloppe essentiellement cylindrique.

4. Boîtier de connecteur enfichable (1) selon la revendication 1,
**caractérisé en ce que**
le collet (10) de l'ouverture de passage de câble (8) présente deux ouvertures de fixation opposées (11),
**en ce que** la bague (13) présente au moins deux boulons de fixation (14) saillant radialement et
**en ce que** les boulons de fixation (14) s'engagent chacun dans une ouverture de fixation (11).

5. Boîtier de connecteur enfichable (1) selon l'une quelconque des revendications précédentes, **caractérisé en ce que**
l'ouverture de passage de câble (8) présente au moins un gradin intérieur (15), mais de préférence deux gradins intérieurs opposés (15).

6. Boîtier de connecteur enfichable (1) selon l'une quelconque des deux revendications précédentes, **caractérisé en ce que**
les gradins (15) présentent chacun une ouverture de fixation (11).

7. Boîtier de connecteur enfichable (1) selon l'une quelconque des revendications précédentes, **caractérisé en ce que**
le raccord de sortie de câble (5) présente au moins un ergot (16) axialement saillant, mais de préférence deux ergots (16) axialement saillants opposés.

8. Boîtier de connecteur enfichable (1) selon l'une quelconque des deux revendications précédentes, **caractérisé en ce que**
l'ergot (16) ou les ergots (16) du raccord de sortie de câble (16) peuvent tourner contre le gradin (15) ou contre un gradin (15) de l'ouverture de passage de câble (8).

9. Boîtier de connecteur enfichable (1) selon l'une quelconque des revendications précédentes, **caractérisé en ce que**
le raccord de sortie de câble (5) présente un angle de courbure (α) et **en ce que** l'angle (α) est compris entre 140° et 90°.

10. Boîtier de connecteur enfichable (1) selon l'une quelconque des revendications précédentes, **caractérisé en ce que**
le boîtier de connecteur enfichable (1) présente une section transversale essentiellement rectangulaire.
